# EUROPÄISCHE PATENTSCHRIFT

(11) **EP 1 334 283 B1**
(45) Veröffentlichungstag und Bekanntmachung des Hinweises auf die Patenterteilung: **15.09.2004**
(21) Anmeldenummer: 01996692.8
(22) Anmeldetag: 10.11.2001
(51) Int. Cl.: F16C 17/02

(54) **GLEITGELAGERTE, GESCHWEISSTE BAUEINHEIT**
WELDED STRUCTURAL PART RECEIVED ON A FRICTION BEARING
UNITE SOUDEE A PALIER LISSE

(30) Priorität: 15.11.2000 DE 10056615
(43) Veröffentlichungstag der Anmeldung: 13.08.2003
(73) Patentinhaber: ZF FRIEDRICHSHAFEN Aktiengesellschaft, 88038 Friedrichshafen (DE)
(72) Erfinder: ROWE, Gerald, 88131 Lindau (DE)
(86) Internationale Anmeldenummer: PCT/EP2001/013073
(87) Internationale Veröffentlichungsnummer: WO 2002/040879

(56) Entgegenhaltungen:
- DE-C- 4 335 751
- GB-A- 1 550 789
- US-A- 2 776 583
- PATENT ABSTRACTS OF JAPAN vol. 1997, no. 06, 30. Juni 1997 (1997-06-30) & JP 09 032823 A (OKI INF SYST;OKI ELECTRIC IND CO LTD), 4. Februar 1997 (1997-02-04)

## Beschreibung

Die Erfindung betrifft eine auf einer Welle oder einer Buchsenanordnung gleitgelagerte Baueinheit nach dem Oberbegriff von Anspruch 1 sowie ein Verfahren zur Herstellung einer solchen Baueinheit.

In Getrieben kommen Baueinheiten, bestehend aus einem außenverzahnten Zahnrad und einem damit verbundenen Übertragungsglied, wie z. B. einem Lamellenträger, vielfach zum Einsatz. Insbesondere bei großen Getrieben, wie Schiffsgetrieben, ist es üblich, derartige Baueinheiten aus zwei Teilen aufzubauen, die durch eine Schweißnaht an der Nabe des Zahnrades miteinander verbunden sind. Es ist üblich, derartige Baueinheiten mittels einer Gleitlagerung drehbar auf einer Welle oder einer auf der Welle angeordneten Buchsenanordnung zu lagern. Um eine für die Gleitlagerung geeignete Funktionsfläche an der Innenwandung einer Bohrung im Bereich der Nabe und der Schweißnaht zu erhalten, kann die Bohrung erst nach dem Schweißen durch Schleifen fertigbearbeitet werden. Die Außenverzahnung des Zahnrades muß jedoch fertigbearbeitet sein, bevor das Übertragungsglied bzw. der Lamellenträger an die Nabe des Zahnrades geschweißt wird, da die Verzahnung ansonsten für die Bearbeitungswerkzeuge nicht zugänglich wäre.

Es ist also nicht möglich, die Baueinheit an der fertigbearbeiteten, maßgenauen Bohrung aufzuspannen, um die Verzahnung fertigzubearbeiten. Zur Fertigbearbeitung der Verzahnung wird das Zahnrad also mit der Bohrung aufgespannt, die zu diesem Zeitpunkt noch ein gewisses Aufmaß für das anschließende Schleifen aufweist. Bei dieser Bearbeitungsabfolge sind Rundlauffehler zwischen der Funktionsfläche der Gleitlagerbohrung und der Laufverzahnung nicht vollständig auszuschließen, was zu einem Taumeln des Zahnrades führt.

Der Erfindung liegt die Aufgabe zugrunde, eine Baueinheit und ein Verfahren zu deren Herstellung anzugeben, wobei eine höhere Genauigkeit erzielt wird, Rundlauffehler vermieden werden und der Herstellaufwand reduziert ist.

Diese Aufgabe wird dadurch gelöst, daß die Funktionsfläche der Gleitlagerung axial vollständig innerhalb des von der Nabe des Zahnrades beanspruchten Bauraums angeordnet ist, dabei einen axialen Abstand von der Schweißnaht aufweist, und daß axial außerhalb der Funktionsfläche zwischen der Innenwandung der Bohrung und der Welle bzw. der Buchsenanordnung sich ein radialer Spalt befindet. Die Funktionsfläche erstreckt sich also nicht über die gesamte axiale Länge der Baueinheit. Der Bereich der Schweißnaht und der axiale Bereich des Übertragungsglieds, das mit dem Zahnrad verbunden ist, liegen außerhalb der Funktionsfläche.

Bei der Herstellung wird hierdurch eine andere Bearbeitungsabfolge ermöglicht. Die Bohrung des Zahnrades mit der Funktionsfläche an der Innenwandung wird zunächst fertigbearbeitet bzw. fertiggeschliffen. Diese hochgenaue Funktionsfläche dient dann zur Aufspannung des Zahnrades bei der Bearbeitung der Außenverzahnung, die Lage der Außenverzahnung zur Bohrung wird hierdurch sehr genau. Erst zum Schluß wird das Übertragungsglied an die Nabe des Zahnrades angeschweißt.

Da im Bereich des Übertragungsglieds und der Schweißnaht keine Funktionsfläche vorhanden ist, bleiben die Ungenauigkeiten, die durch den Schweißvorgang verursacht werden, ohne Auswirkung.

Vorteilhafte Ausgestaltungen der Erfindung sind durch die abhängigen Ansprüche gegeben.

Ein nachfolgendes Überdrehen der Baueinheit im Bereich der Schweißnaht reduziert die Kerbwirkung der Schweißstelle. Bei dem Drehvorgang müssen jedoch keine hohen Anforderungen an die Maßgenauigkeit erfüllt werden.

Es hat sich gezeigt, daß der axiale Abstand zwischen der Schweißnaht und der Begrenzung der Funktionsfläche mindestens 3,5 mm betragen sollte, um die Einflüsse eines Schweißverzugs auf die Funktionsfläche auszuschließen.

Die Erfindung wird anhand der beiliegenden Figuren näher erläutert, wobei
- Fig. 1: ein Detail eines bekannten Getriebes mit einem gleitgelagerten Ritzel und einem daran angeschweißten Lamellenträger und
- Fig. 2: eine Ausgestaltung einer erfindungsgemäßen Baueinheit
zeigen.

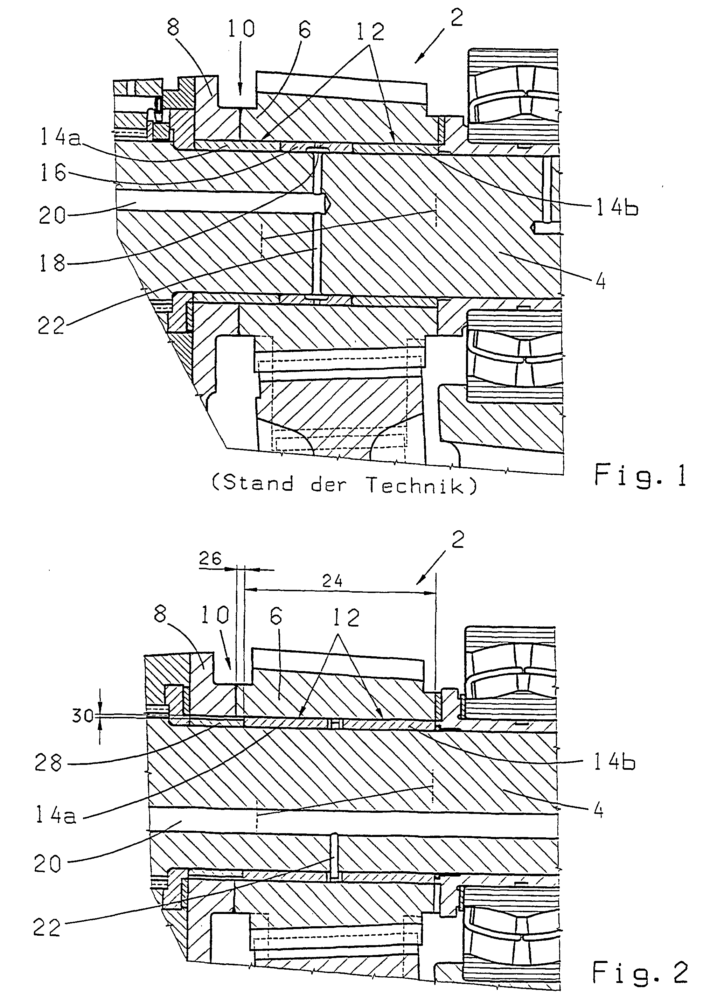

In Fig. 1, die ein Detail eines bekannten Getriebes zeigt, ist mit 2 ein außenverzahntes Ritzel bezeichnet, das gegenüber einer Welle 4 drehbar gelagert ist. In axialer Verlängerung der Nabe 6 des Ritzels 2 ist ein nur teilweise dargestellter Lamellenträger 8 angeordnet, der mit der Nabe 6 des Ritzels 2 durch eine umlaufende Schweißnaht 10 verbunden ist. Die aus dem Ritzel 2 und dem Lamellenträger 8 bestehende Baueinheit weist eine durchgehende Bohrung auf, welche an ihrer Innenwandung eine Funktionsfläche 12 einer Gleitlagerung aufweist. Wenn das Ritzel 2 sich dreht, findet eine Gleitbewegung an den Zylinderaußenflächen der Buchsen 14A, 14B statt. Die Buchsen sind auf der Welle 4 angeordnet. Zwischen den Buchsen 14A, 14B ist eine Distanzhülse 16 angeordnet, die an ihrem Umfang mehrere Schmierölbohrungen 18 aufweist. Schmieröl, welches durch einen axialen Kanal 20 und über die radialen Kanäle 22 zugeführt wird, dient zur Schmierung der Gleitflächen zwischen den Buchsen 14A, 14B und der Funktionsfläche 12 der Baueinheit 2, 8.

Bei dieser bekannten, gleitgelagerten Baueinheit erstreckt sich die Funktionsfläche 12 der Gleitlagerung über die gesamte Länge, so daß auch der Bereich der Schweißnaht und der Bereich des Lamellenträgers 8 in die Funktionsfläche einbezogen sind. Um eine ausreichende Genauigkeit und Oberflächenqualität der Funktionsfläche zu gewährleisten, ist es erforderlich, daß die Fertigbearbeitung der durchgehenden Bohrung der Baueinheit erst nach dem Zusammenschweißen des Ritzels mit dem Lamellenträger 8 erfolgt, was aufwendig ist und Rundlauffehler nach sich zieht.

Die in Fig. 2 dargestellte, erfindungsgemäße Ausgestaltung, in der gleiche Positionen mit gleichen Bezugszeichen wie in Fig. 1 versehen sind, weist diese Probleme nicht auf. Die Funktionsfläche 12 erstreckt sich bei der erfindungsgemäßen Anordnung axial lediglich über den mit 24 gekennzeichneten Bereich. Der Bereich der Bohrung innerhalb der Nabe des Lamellenträgers 8 sowie ein axialer Bereich 26 der Nabe 6, der an die Schweißnaht 10 angrenzt, gehören nicht zur Funktionsfläche. Vielmehr befindet sich in diesem axialen Bereich zwischen der Innenwandung der Bohrung und der Buchse 28, die lediglich als axiales Distanzelement dient, ein radialer Spalt 30. Die Funktionsfläche ist also axial vollständig innerhalb des von der Nabe 6 des Zahnrades beanspruchten Bauraums angeordnet und weist dabei einen axialen Abstand von der Schweißnaht 10 auf. Auf diese Weise wird gewährleistet, daß Ungenauigkeiten bzw. Maßabweichungen oder Bauteilverformungen, die beim Schweißvorgang entstehen, sich nicht auf die Funktionsfläche 12 auswirken. Die Funktionsfläche kann daher bereits vor dem Schweißvorgang und vor der Fertigbearbeitung der Außenverzahnung geschliffen werden, wodurch eine hochgenaue Lage der Außenverzahnung zur Bohrung mit der Funktionsfläche erzielbar ist.

### Bezugszeichen

- 2: Ritzel
- 4: Welle
- 6: Nabe
- 8: Lamellenträger
- 10: Schweißnaht
- 12: Funktionsfläche
- 14A, 14B: Buchsen
- 16: Distanzhülse
- 18: Schmierölbohrungen
- 20: Kanal
- 22: Kanal
- 24: axialer Bereich
- 26: axialer Bereich
- 28: Distanzbuchse
- 30: Spalt

## Patentansprüche

1. Auf einer Welle (4) oder einer Buchsenanordnung (14) gleitgelagerte Baueinheit, die ein außenverzahntes Zahnrad (2) und ein in axialer Verlängerung einer Nabe (6) des Zahnrades (2) mit einer Schweißnaht (10) verbundenes Übertragungsglied (8) umfaßt, wobei die Baueinheit eine Bohrung aufweist, welche an ihrer Innenwandung eine Funktionsfläche (12) einer Gleitlagerung aufweist, **dadurch gekennzeichnet, daß** die Funktionsfläche (12) axial vollständig innerhalb des von der Nabe (6) des Zahnrades beanspruchten Bauraums angeordnet ist, dabei einen axialen Abstand (26) von der Schweißnaht (10) aufweist, und daß axial außerhalb der Funktionsfläche (12) zwischen der Innenwandung der Bohrung und der Welle (4) bzw. der Buchsenanordnung (14A, 14B) sich ein radialer Spalt (30) befindet.

2. Baueinheit nach Anspruch 1, **dadurch gekennzeichnet, daß** der axiale Abstand (26) zwischen der Schweißnaht (10) und der Begrenzung der Funktionsfläche mindestens 3,5 mm beträgt.

3. Baueinheit nach Anspruch 1 oder 2, **dadurch gekennzeichnet, daß** das Übertragungsglied (8) ein Lamellenträger ist.

4. Getriebe mit einer Baueinheit nach einem der Ansprüche 1 bis 3.

5. Verfahren zur Herstellung einer Baueinheit, bestehend aus einem außenverzahnten Zahnrad (2) und einem in axialer Verlängerung einer Nabe (6) des Zahnrades (2) mit einer Schweißnaht (10) verbundenen Übertragungsglied (8), wobei die Baueinheit eine durchgehende Bohrung aufweist, welche an ihrer Innenwandung eine Funktionsfläche (12) einer Gleitlagerung aufweist, **gekennzeichnet durch** folgende Bearbeitungsabfolge:
- die Bohrung des Zahnrades (2) mit der Funktionsfläche (12) an der Innenwandung wird fertigbearbeitet;
- die Außenverzahnung des Zahnrades (2) wird fertigbearbeitet, wobei das Zahnrad an der Bohrung aufgespannt ist;
- das Übertragungsglied (8) wird an die Nabe (6) des Zahnrades (2) angeschweißt.

6. Verfahren nach Anspruch 5, **dadurch gekennzeichnet, daß** die Baueinheit (2, 8) im Bereich der Schweißnaht (10) durch Drehen bearbeitet wird.

## Claims

1. The invention relates to a modular unit, which is supported in friction bearings on a shaft (4) or on an arrangement of bushes (14) and comprises an external toothed gear (2) and a transmission element (8) linked by a welded joint (10) in axial extension of a hub (6) of the gear (2), with the modular unit featuring a borehole provided with a functional surface (12) of a friction bearing on its inside wall, **characterized in that** the functional surface (12) is axially arranged within the space occupied by the hub (6) of the gear, with an axial distance (26) being kept to the welded joint (10); and that a radial gap (30) is provided axially outside the functional surface (12) between the inside wall of the borehole and the shaft (4) or the arrangement of bushes (14A, 14B).

2. Modular unit according to claim 1, **characterized in that** the axial distance (26) between the welded joint (10) and the boundary of the functional surface amounts to at least 3.5 mm.

3. Modular unit according to claim 1 or 2, **characterized in that** the transmission element (8) is a disk carrier.

4. Transmission with a modular unit according to one of the claims 1 through 3.

5. Method for producing a modular unit consisting of an externally toothed gear (2) and a transmission element (8) linked by a welded joint (10) in axial extension of a hub (6) of the gear (2), with the modular unit featuring an uninterrupted borehole, which is provided with a functional surface (12) of a friction bearing on its inside wall, **characterized by** the following processing sequence:
- finishing of the borehole of the toothed gear (2) with the functional surface (12) on the inside wall;
- finishing of the external teething of the gear (2), with the gear being clamped on the borehole;
- welding of the transmission element (8) to the hub (6) of the gear (2).

6. Method according to claim 5, **characterized in that** the modular unit (2, 8) in the area of the welded joint (10) is subjected to turning treatment.

## Revendications

1. Un dispositif monté sur roulements sur un arbre (4) ou sur un système de douilles (14) qui enveloppe un engrenage à denture extérieure (2) et un élément de transmission (8) relié par un cordon de soudure (10) et placé dans le prolongement axial du moyeu (6) de l'engrenage (2). Le dispositif présente un perçage, ce perçage dispose sur son flanc intérieur d'une surface fonctionnelle (12) avec fixation à glissement. Le dispositif est **caractérisé en ce que** la surface fonctionnelle (12) est entièrement intégrée dans l'espace de montage du moyeu (6) de l'engrenage. Il présente en outre un écart axial (26) par rapport au cordon de soudure (10) et une fente radiale (30) située, sur le plan axial, en dehors de la surface fonctionnelle (12), entre le flanc intérieur du perçage et l'arbre (4) ou le système de douilles (14A, 14B).

2. Un dispositif selon la revendication 1 **caractérisé en ce que** l'écart axial (26) entre le cordon de soudure (10) et la limite de la surface fonctionnelle est de 3,5 mm minimum.

3. Un dispositif selon la revendication 1 ou 2 **caractérisé en ce que** l'élément de transmission (8) est un porte-disques.

4. Une boîte de vitesses équipée d'un dispositif selon les revendications 1 à 3.

5. Un procédé de fabrication d'un dispositif se composant d'un engrenage à denture extérieure (2) et d'un élément de transmission (8) relié par un cordon de soudure (10) et placé dans le prolongement axial d'un moyeu (6) de l'engrenage (2). Le dispositif présente un perçage traversant l'ensemble, ce perçage dispose sur son flanc intérieur d'une surface fonctionnelle (12) avec fixation à glissement. Le procédé de fabrication est **caractérisé en ce qu'**il se compose des étapes de travail suivantes :
- le perçage de l'engrenage (2) avec la surface fonctionnelle (12) est réalisé avec finition ;
- la denture extérieure de l'engrenage (2) est réalisée avec finition et montée sur le perçage ;
- l'élément de transmission (8) est soudé sur le moyeu (6) de l'engrenage (2).

6. Un procédé selon la revendication 5 et **caractérisé en ce que** le dispositif (2, 8) est élaboré par fraisage au niveau du cordon de soudure (10).
